# FASCICULE DE BREVET EUROPEEN

(11) **EP 3 610 187 B1**
(45) Date de publication et mention de la délivrance du brevet: **26.05.2021**
(21) Numéro de dépôt: 18715041.2
(22) Date de dépôt: 09.04.2018
(51) Int. Cl.: F16L 37/091, F16L 37/092

(54) **DISPOSITIF DE RACCORDEMENT À TÉMOIN SONORE DE CONNEXION**
VERBINDUNGSVORRICHTUNG MIT EINEM HÖRBAREN VERBINDUNGSANZEIGER
CONNECTING DEVICE WITH AUDIBLE INDICATOR OF CONNECTION

(30) Priorité: 10.04.2017 FR 1753126
(43) Date de publication de la demande: 19.02.2020
(73) Titulaire: Parker Hannifin Emea S.A.R.L., 1163 Etoy (CH)
(72) Inventeur: LE QUERE, Philippe, 35830 Betton (FR)
(74) Mandataire: Prouvez, Julien
(86) Numéro de dépôt international: PCT/EP2018/059055
(87) Numéro de publication internationale: WO 2018/189120

(56) Documents cités:
- WO-A1-2009/068932
- JP-A- 2004 232 746
- US-A- 5 921 588

## Description

### DOMAINE DE L'INVENTION

La présente invention concerne le domaine des dispositifs de raccordement de tubes et plus particulièrement celui des dispositifs de raccordement de tubes à témoin de connexion.

### ARRIERE PLAN DE L'INVENTION

Un circuit de transport de fluide comprend des tubes connectés entre eux et/ou à des éléments de circuit (distributeurs, actionneurs, capteurs, outils, réservoirs...) par des dispositifs de raccordement.

Un dispositif de raccordement comprend généralement un corps délimitant un canal tubulaire ayant un tronçon de réception d'une extrémité de tube. Le tronçon de réception est généralement pourvu de moyens pour y assujettir l'extrémité de tube de manière étanche. Ces moyens comportent habituellement un organe (pince ou rondelle dentée) d'accrochage de l'extrémité de tube et un joint annulaire agencé pour être comprimé entre une paroi du tronçon de réception et l'extrémité de tube de manière à assurer une étanchéité entre ceux-ci.

Pour que les moyens d'étanchéité puissent assurer leur fonction de manière fiable et efficace, il est nécessaire que l'extrémité de tube soit suffisamment enfoncée dans le tronçon de réception pour atteindre l'organe d'accrochage et le joint d'étanchéité. A cette fin, il est courant de simplement prévoir dans le tronçon de réception, après l'organe d'accrochage et le joint d'étanchéité par référence à un sens d'enfoncement de l'extrémité de tube dans le tronçon de réception, une butée contre laquelle l'extrémité de tube vient en appui lorsqu'elle est suffisamment enfoncée. L'opérateur chargé du raccordement sait que l'extrémité de tube est suffisamment enfoncée dans le dispositif de raccordement s'il détecte l'arrivée en butée de l'extrémité de tube. Cependant, l'effort d'enfoncement de l'extrémité de tube dans le tronçon de réception n'est pas linéaire et s'élève lorsqu'il s'agit de faire passer l'extrémité de tube par l'organe d'accrochage et/ou le joint d'étanchéité. Cette élévation qui peut être relativement importante peut varier d'une opération de raccordement à l'autre notamment selon que le joint d'étanchéité ait été préalablement graissé ou non, ou que la température ambiante soit plus ou moins élevée. Il arrive donc que l'opérateur se méprenne sur cet accroissement soudain de l'effort d'enfoncement et l'interprète comme l'arrivée en butée de l'extrémité de tube. L'opérateur cesse alors d'enfoncer l'extrémité de tube dans le dispositif de raccordement et celle-ci n'est pas suffisamment enfoncée, occasionnant un risque de fuite et/ou de désaccouplement du tube.

Le document WO 2009/068932 A1 forme état de la technique. Ce document divulgue un dispositif de raccordement d'un tube comprenant un corps délimitant un canal tubulaire ayant un tronçon de réception d'une portion d'extrémité de tube, avec un élément d'étanchéité annulaire et une bague d'accrochage , ce dispositif de raccordement comprenant une bague témoin sonore annulaire qui est déformable en expansion entre un état stable initial et un état déformé, ce témoin sonore annulaire étant déplacé par la portion d'extrémité, lors de l'introduction de cette dernière dans le tronçon de réception, le témoin sonore annulaire venant alors se déformer, contre un évasement conique, en produisant un signal sonore.

### OBJET DE L'INVENTION

Un but de l'invention est de réduire les risques de fuite et/ou de désaccouplement d'une extrémité de tube d'un dispositif de raccordement.

### RESUME DE L'INVENTION

A cet effet, on prévoit un dispositif de raccordement d'un tube comprenant un corps délimitant un canal tubulaire ayant un tronçon de réception d'une portion d'extrémité de tube. Le tronçon de réception définit une direction d'introduction du tube et a une ouverture d'entrée. Le tronçon de réception est pourvu d'un élément d'étanchéité annulaire et d'un organe d'accrochage pour assujettir de manière étanche la portion d'extrémité de tube dans le tronçon de réception. Selon l'invention, le dispositif de raccordement comprend un témoin sonore annulaire qui est déformable entre un état stable initial et un état déformé. Le témoin sonore annulaire est monté dans le tronçon de réception entre l'ouverture d'entrée et l'élément d'étanchéité annulaire pour être déplacé au-delà de l'élément d'étanchéité par la portion d'extrémité de tube, lors de l'introduction de cette dernière dans le tronçon de réception, le témoin sonore annulaire venant alors se déformer contre un obstacle depuis l'état initial vers l'état déformé jusqu'à produire un signal sonore.

On comprend que l'effort d'introduction du tube dans le tronçon de réception est transmis au témoin sonore arrivant au contact de l'obstacle qui forme une butée à l'enfoncement du témoin sonore dans le tronçon de réception, et que cette butée est effacée par la déformation du témoin sonore sous l'effet de l'effort d'introduction du tube dans le tronçon de réception : la résistance à l'introduction du tube va donc augmenter avant de diminuer rapidement provoquant un enfoncement final relativement brusque du tube dans le tronçon de réception. On obtient ainsi un dispositif permettant à un utilisateur de clairement identifier que le tube est correctement connecté grâce au signal sonore émis suite à la déformation du témoin sonore. La position particulière du témoin sonore entre l'ouverture d'entrée et l'élément d'étanchéité permet de protéger l'élément d'étanchéité d'une éventuelle blessure par l'extrémité du tube lors de son introduction et réduit également la résistance ressentie par l'opérateur lorsque l'extrémité de tube passe sous l'élément d'étanchéité. Ces caractéristiques cumulées permettent de réduire les risques de fuite et/ou de désaccouplement entre une extrémité de tube et le dispositif de raccordement de l'invention.

Au sens de l'invention, un tube est un élément présentant une forme tubulaire comme par exemple un embout de connexion, une tétine de raccordement, un filtre ou un bouchon.

Avantageusement, l'obstacle est solidaire du corps.

Avantageusement encore, l'obstacle comprend une portion formant un angle non nul avec la direction d'introduction du tube et peut comprendre une portion en saillie radiale dans le canal.

Selon un mode de réalisation particulier, le témoin sonore comprend une face d'appui de l'extrémité du tube et une portion effilée dont la section transversale décroit au fur et à mesure que l'on s'éloigne de la face d'appui selon la direction d'introduction.

Le dispositif de raccordement de l'invention est particulièrement résistant aux vibrations lors de son transport lorsque le témoin sonore comprend trois sommets en appui sur une paroi du canal tubulaire.

Le dispositif de raccordement de l'invention peut avantageusement être réutilisé une seconde fois lorsque le témoin sonore est agencé de manière à retourner élastiquement à son état initial lors du retrait du tube.

Selon un mode de réalisation préféré, le signal sonore est produit par la percussion d'une portion du témoin sonore contre le corps.

Alternativement, le signal sonore est produit par la rupture d'une portion du témoin sonore. A cet effet, le témoin sonore peut comprendre une portion localement fragilisée. La portion localement fragilisée peut comprendre une section transversale réduite par rapport à une section transversale adjacente du témoin sonore.

Lorsque le témoin sonore est réalisé par injection, la portion localement fragilisée comprend avantageusement une zone de recollement de la matière injectée opposée au point d'injection.

Selon un mode de réalisation particulier, la portion localement fragilisée comprend un élément sécable s'étendant entre deux portions distantes du témoin sonore. Avantageusement, un tel élément sécable comprend un marqueur RFID.

D'autres caractéristiques et avantages de l'invention apparaitront à la lumière de la description qui suit de modes de réalisation particuliers non limitatifs de l'invention.

### BREVE DESCRIPTION DES DESSINS

Il sera fait référence aux figures annexées parmi lesquelles :
- la figure 1 est une vue schématique en coupe longitudinale d'un premier mode de réalisation du dispositif selon l'invention ;
- la figure 2 est une vue schématique en perspective d'un premier mode de réalisation d'un témoin sonore de la figure 1, le témoin sonore étant dans son état initial;
- la figure 3 est une vue schématique de face du témoin sonore de la figure 2 ;
- la figure 4 est une vue schématique en coupe brisée selon le plan IV-IV du témoin sonore de la figure 2 ;
- la figure 5 est une vue schématique en coupe longitudinale du témoin sonore de la figure 2 dans son état déformé ;
- les figures 6 à 10 sont des vues schématiques partielles en coupe de différents états du dispositif de la figure 1 lors de l'introduction d'un tube dans celui-ci ;
- la figure 11 est une vue schématique en demi-coupe du dispositif de la figure 1 lors du retrait d'un tube préalablement introduit dans celui-ci ;
- la figure 12.a est une vue schématique de face d'un deuxième mode de réalisation d'un témoin sonore selon l'invention, le témoin sonore étant dans son état initial;

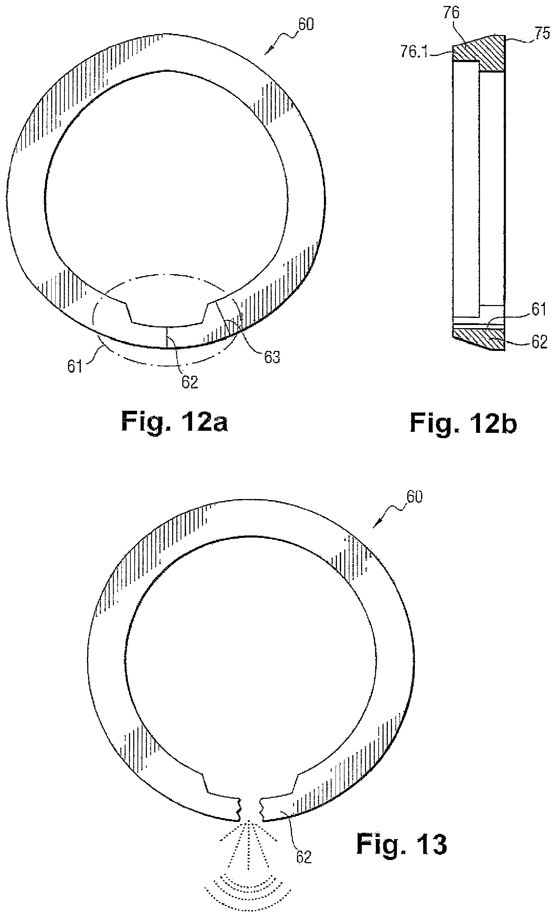

- la figure 12.b est une vue schématique en coupe transversale du témoin sonore de la figure 12.a;
- la figure 13 est une vue schématique de face du témoin sonore de la figure 12.a, le témoin sonore étant dans son état déformé ;

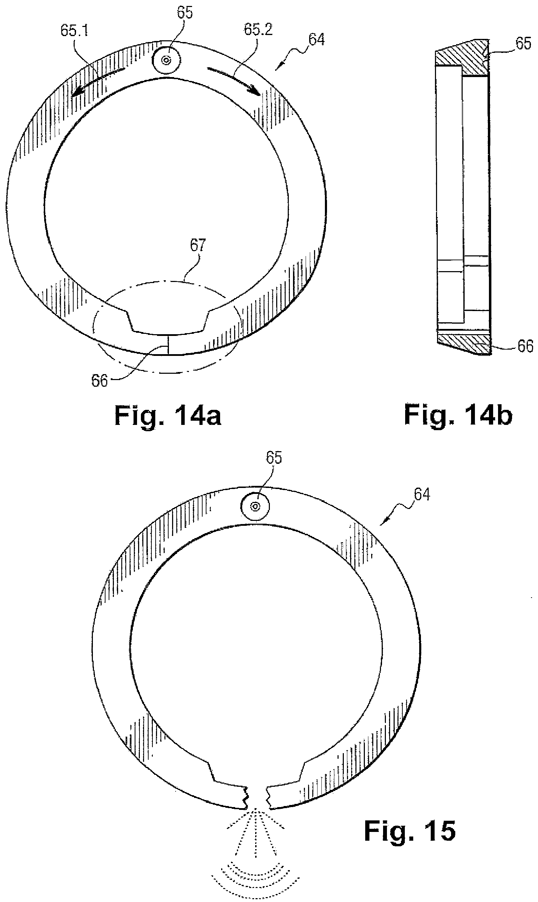

- la figure 14.a est une vue schématique de face d'un troisième mode de réalisation d'un témoin sonore selon l'invention, le témoin sonore étant dans son état initial;
- la figure 14.b est une vue schématique en coupe transversale du témoin sonore de la figure 14.a;
- la figure 15 est une vue schématique de face du témoin sonore de la figure 13.a, le témoin sonore étant dans son état déformé ;

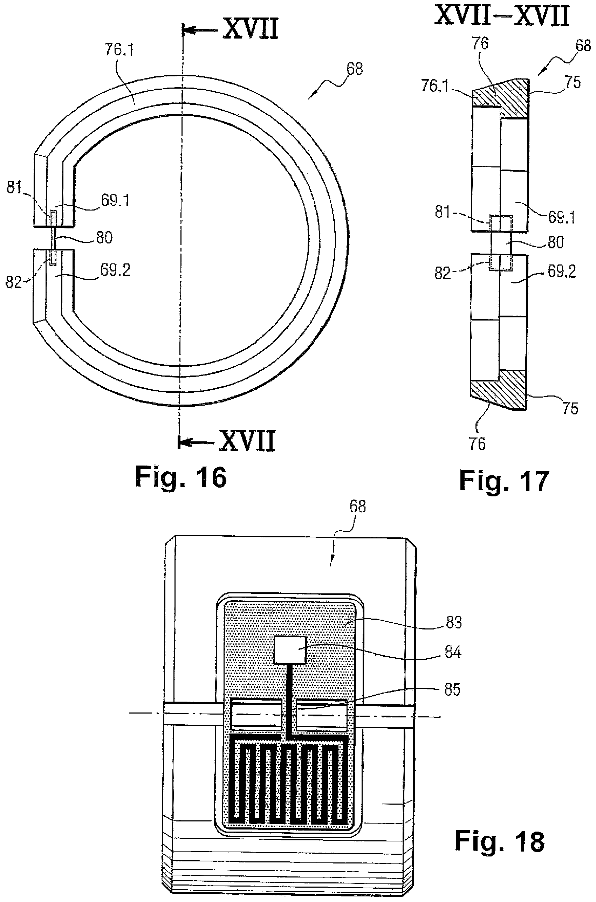

- la figure 16 est une vue schématique en coupe transversale d'un quatrième mode de réalisation d'un témoin sonore selon l'invention, le témoin sonore étant dans son état initial;
- la figure 17 est une vue schématique en coupe transversale du témoin sonore de la figure 16;
- la figure 18 est une vue schématique de de côté d'un cinquième mode de réalisation d'un témoin sonore selon l'invention, le témoin sonore étant dans son état initial.

### DESCRIPTION DETAILLEE DE L'INVENTION

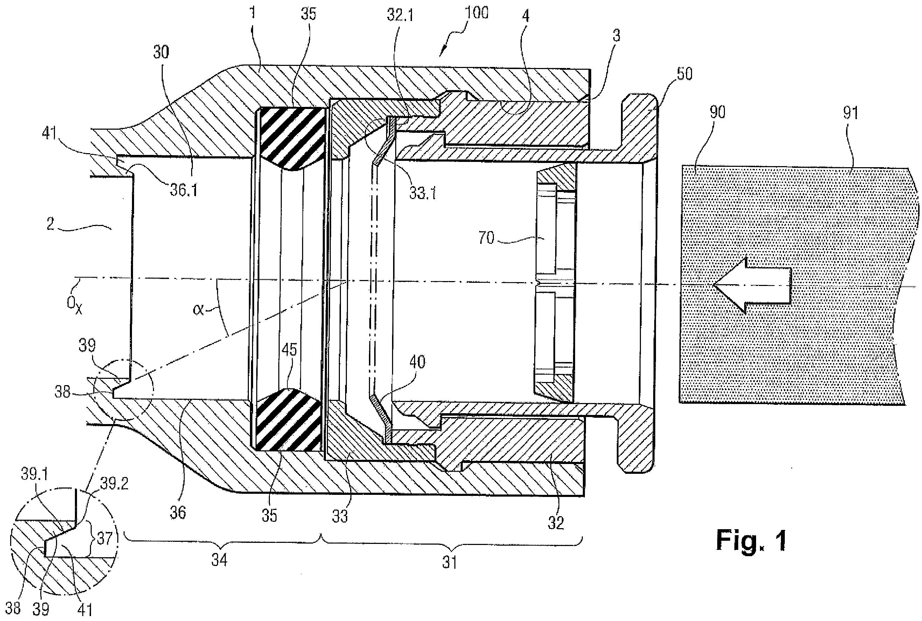

En référence aux figures 1 à 11, le dispositif de raccordement selon l'invention, et généralement désigné 100, comprend un corps 1 délimitant un canal tubulaire 2 ayant un tronçon de réception 30 d'une portion d'extrémité 90 d'un tube 91. Le tronçon de réception 30 définit une direction Ox d'introduction du tube 91 et possède une ouverture d'entrée 3. Le tronçon de réception 30 est, ici, délimité pour une première portion 31 proximale de l'ouverture d'entrée 3 par une première et une deuxième douille 32 et 33 respectivement reçues dans un premier chambrage 4 du corps 1 et, pour une seconde portion 34 distale, par un troisième chambrage 35 et un quatrième chambrage 36. Une rondelle dentée d'accrochage 40 est maintenue entre une extrémité 32.1 de la première douille 32 et un épaulement 33.1 de la deuxième douille 33. Un joint d'étanchéité 45 annulaire en élastomère est reçu dans le troisième chambrage 35 et possède un diamètre intérieur légèrement inférieur au diamètre extérieur du tube 91. L'extrémité 36.1 du quatrième chambrage 36 opposée à l'ouverture d'entrée 3 comprend un épaulement 37 annulaire qui vient en saillie radiale dans le canal 2. L'épaulement 37 comprend une première portion 38 s'étendant radialement dans le tronçon de réception 30 et à l'extrémité de laquelle vient une deuxième portion 39 dont une surface 39.1 tronconique forme un angle α d'environ vingt degrés avec la direction d'introduction Ox. Les portions 38 et 39 de l'épaulement 37 définissent une gorge 41 annulaire pourvue d'une rampe réalisée par la surface 39.1.

Un poussoir de déconnexion 50 tubulaire connu en lui-même est monté à coulissement dans la première portion proximale 31 du tronçon de réception 30.

Un témoin sonore 70 annulaire est monté dans le poussoir de déconnexion 50. Comme visible en figure 1, le témoin sonore 70 est monté dans le tronçon de réception 30 entre l'ouverture d'entrée 3 d'une part et la rondelle dentée d'accrochage 40 ainsi que le joint d'étanchéité annulaire 45 d'autre part.

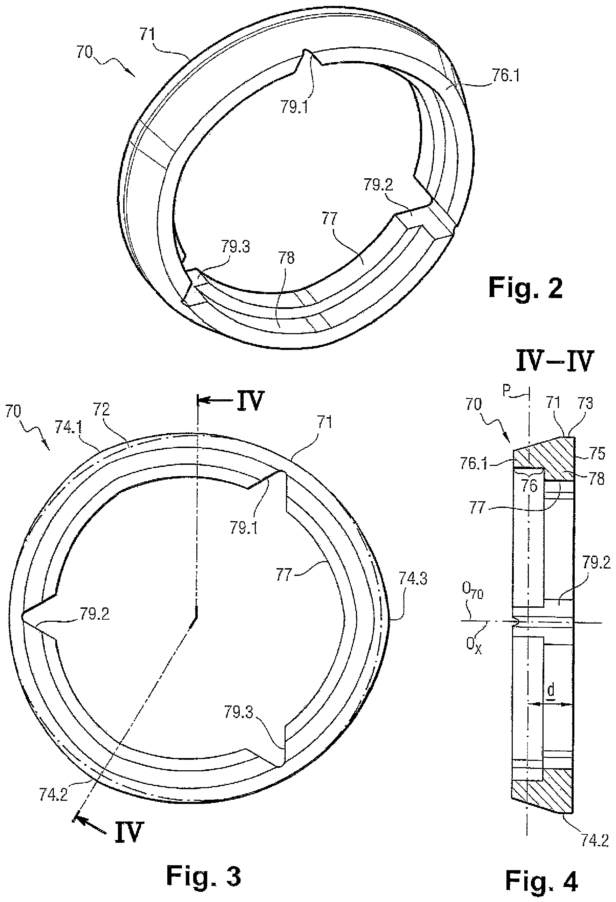

En référence aux figures 2 à 5, le témoin sonore 70 est de forme sensiblement annulaire et d'axe de révolution O₇₀. Plus particulièrement, la surface extérieure 71 du témoin sonore 70 comprend une surface cylindrique 73 droite dont la courbe génératrice est un cercle 72 et en saillie radiale de laquelle viennent trois sommets 74.1, 74.2 et 74.3. Les sommets 74.1, 74.2 et 74.3 sont espacées de 120° l'un l'autre et viennent en appui contre une paroi intérieure du poussoir de déconnexion 50 de manière à maintenir le témoin sonore 70 en position dans le poussoir de déconnexion 50 tout en autorisant son déplacement dans le tronçon de réception 30 sous l'effet d'une force modérée qui lui serait appliquée selon la direction Ox.

Comme visible en figure 4, le témoin sonore 70 comprend une face d'appui 75 transversale sur laquelle l'extrémité 90 du tube 91 est destinée à venir en appui. Le témoin sonore 70 comprend également une portion effilée 76 annulaire dont la section transversale (c'est à dire considérée dans un plan P sensiblement normal à la direction introduction Ox) décroit à mesure que la distance d, qui sépare le plan P dans lequel ladite section est considérée de la face d'appui 75, augmente. La circonférence intérieure 77 du témoin sonore 70 comprend un épaulement annulaire 78 ainsi que trois rainures 79.1, 79.2 et 79.3 débouchantes de section transversale sensiblement en forme de V.

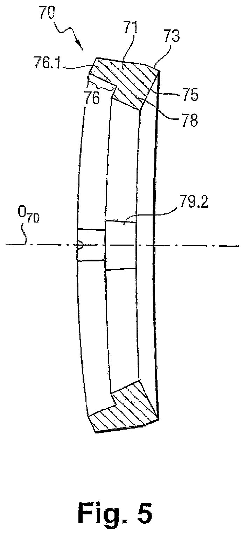

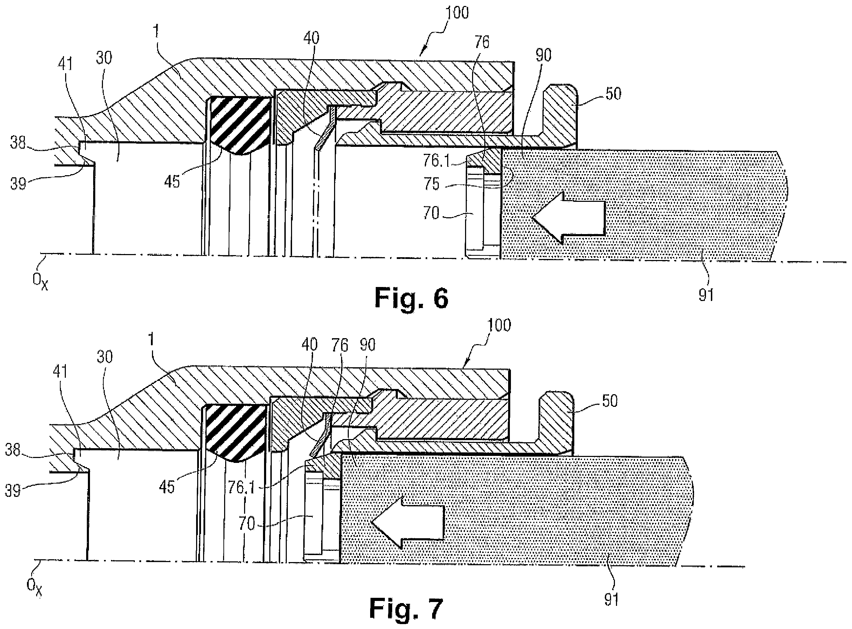

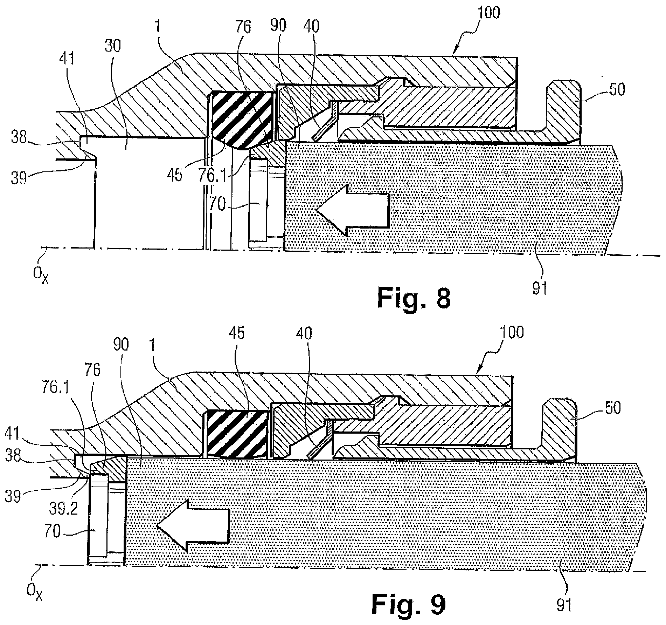

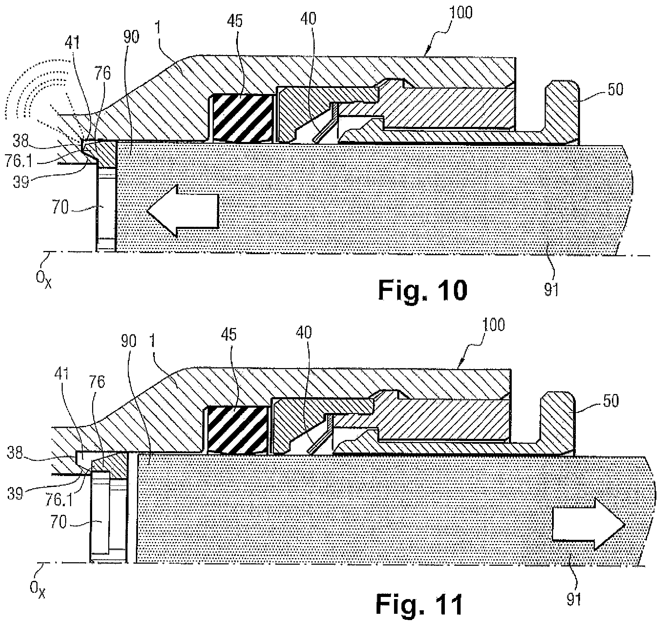

Le témoin sonore 70 peut adopter deux états. Un premier état initial représenté en figure 4 et un deuxième état déformé représenté en figure 5 dans lequel la portion effilée 76 s'est déplacée pour s'éloigner de l'axe de révolution O_{7C} du témoin sonore 70. Pour raccorder un tube 91 au dispositif 100, on présente l'extrémité 90 du tube 91 face à l'ouverture d'entrée 3 (figure 1). Lors d'une deuxième étape, on enfonce l'extrémité 90 de tube 91 dans le canal tubulaire 2 (figure 6) et celle-ci vient au contact de la face d'appui 75 du témoin sonore 70. La poursuite de l'introduction du tube 91 dans le tronçon de réception 30 provoque le déplacement du témoin sonore 70 et la portion effilée 76 du témoin sonore 70 passe sous la rondelle dentée 40 (figure 7) puis s'engage sous le joint d'étanchéité 45 (figure 8). En soulevant le joint d'étanchéité 45, la portion effilée 76 réduit l'effort d'introduction du tube 91 dans le dispositif de raccordement 100 et protège le joint d'étanchéité 45 des arêtes vives de la face de l'extrémité 90 du tube 91. L'opérateur ne ressent donc pas d'augmentation importante de l'effort d'introduction du tube 91 lors du passage du joint d'étanchéité 45 et discrimine alors aisément l'étape au cours de laquelle le tube 91 passe le joint d'étanchéité 45 d'une venue en butée du tube 91. La poursuite de l'introduction du tube 91 dans le tronçon de réception 30 déplace le témoin sonore 70 au-delà du joint d'étanchéité 45 et amène celui-ci au voisinage de l'épaulement 37 (figure 9). L'extrémité 76.1 de la portion effilée 76 est alors en butée contre l'apex 39.2 de la portion 39 de l'épaulement 37. La résistance à l'enfoncement du tube 91 dans le tronçon de réception 30 augmente jusqu'à ce que l'effort appliqué par la deuxième portion 39 de l'épaulement 37 sur la portion effilée 76 dépasse une valeur seuil Fₛₑᵤᵢₗ : une déformation du témoin sonore 70 est alors amorcée et autorise l'engagement du témoin sonore 70 sur la surface 39.1. La déformation du témoin sonore 70 est alors accélérée - la surface 39.1 formant un coin - et le témoin sonore 70 s'engage dans la gorge 41 pour passer alors dans son deuxième état déformé et l'extrémité 76.1 de la portion effilée 76 vient brusquement percuter, sous l'effort d'insertion du tube 91, la portion 38 (figure 10) de l'obstacle 37, provoquant un signal sonore confirmant à l'opérateur l'engagement correct de l'extrémité 90 du tube 91 dans le tronçon de réception 30. Ainsi, lorsque l'effort d'insertion du tube est transmis à la face 75 par une extrémité 90 d'un tube 91, l'opérateur ressent un accroissement de la résistance à l'enfoncement du tube et augmente alors l'effort d'enfoncement qu'il applique sur le tube 91 bloqué dans son déplacement. L'amorce de la déformation du témoin sonore 70 est relativement brutale (le témoin sonore passer d'une butée franche sur une surface radiale à un glissement sur une surface tronconique) et se traduit par une soudaine diminution de la résistance à l'enfoncement du tube 90 qui reprend alors brusquement son déplacement dans le sens d'introduction jusqu'à ce que le témoin sonore 70 vienne heurter le fond 38 de la gorge en émettant un bruit de choc.

L'opérateur perçoit alors une indication claire, aisément identifiable, de la conformité de la connexion du tube 91 au dispositif de raccordement 100.

Lors du retrait du tube 91, l'opérateur agit sur le poussoir de déconnexion 50 pour libérer le tube 91 des dents de la rondelle dentée d'accrochage 40. L'opérateur extrait alors le tube 91 du dispositif de raccordement 100. Au cours de ce mouvement de retrait du tube 91, l'extrémité 90 du tube 91 s'éloigne de la face d'appui 75 du témoin sonore 70. Celui-ci retourne alors à son état initial et s'éjecte de la gorge 41 (figure 11). Cette position du témoin sonore 70 face à la gorge 41 permet, lors d'une prochaine insertion d'une extrémité 90 d'un tube 91 dans le dispositif de raccordement 100, que le témoin sonore 70 puisse à nouveau être utilisé et émettre un signal sonore témoignant de la bonne connexion du tube 91.

Les éléments identiques ou analogues à ceux précédemment décrits porteront une référence numérique identique à ceux-ci dans la description des deuxième, troisième, quatrième et cinquième modes de réalisation de l'invention.

En référence aux figures 12.a et 12.b, le témoin sonore 60 selon le deuxième mode de réalisation de l'invention comprend une face d'appui 75 et une portion effilée 76 ainsi qu'une portion 61 localement fragilisée. La portion 61 est, ici, une portion dont la section transversale 62 est réduite par rapport à une section transversale 63 adjacente du témoin sonore 60. Un tel témoin sonore 60 peut être obtenu par usinage d'un tronçon de tube en polymère.

Lorsque le témoin sonore 60 passe depuis son premier état initial représenté aux figures 12.a et 12.b vers son deuxième état déformé représenté en figure 13, la portion fragilisée 61 se brise et émet un signal sonore encore plus bruyant que celui émis par le premier mode de réalisation du témoin sonore 70.

En référence à la figure 14, le témoin sonore 64 selon le troisième mode de réalisation de l'invention est identique au témoin sonore 60 et est réalisé par injection d'un composant polymère (par exemple un polyamide) dans un moule. L'injection est réalisée en un point d'injection 65 et la matière injectée forme deux flux 65.1 et 65.2 qui parcourent le moule de part et d'autre du point d'injection 65 pour se rejoindre en une zone de recollement 66 diamétralement opposée au point d'injection 65. La portion 67 localement fragilisée du témoin sonore 64 est réalisée de manière à comprendre cette zone de recollement 66.

Ainsi, lorsque le témoin sonore 64 passe depuis son premier état initial représenté aux figures 14.a et 14.b vers son deuxième état déformé représenté en figure 15, la portion fragilisée 67 se brise le long de la zone de recollement 66 et émet un signal sonore encore plus bruyant que celui émis par le premier mode de réalisation du témoin sonore 70 (figure 15). L'effort de déformation nécessaire au passage du premier état initial au deuxième état déformé de ce troisième mode de réalisation du témoin sonore 64 est plus faible que celui nécessaire au passage du premier état initial au deuxième état déformé du deuxième mode de réalisation du témoin sonore 60.

En référence aux figures 16 et 17, le témoin sonore 68 selon le quatrième mode de réalisation a une section transversale sensiblement en forme de C dont les deux portions distantes 69.1 et 69.2 sont reliées par une lame plastique sécable 80 dont les extrémités 81 et 82 sont respectivement collées sur les extrémités distantes 69.1 et 69.2 du témoin sonore 68.

Ainsi, lorsque le témoin sonore 68 passe dans son deuxième état déformé, la lame plastique sécable 80 se brise et émet un signal sonore. L'effort de déformation nécessaire au passage du premier état initial au deuxième état déformé du quatrième mode de réalisation du témoin sonore 68 peut être aisément dimensionné et modifié par la simple modification des dimensions de la lame plastique sécable 80 ou de son matériau.

Selon un cinquième mode de réalisation représenté en figure 18, la lame plastique sécable 80 du témoin sonore 68comprend un marqueur RFID 83. Le marqueur RFID 83 comprend ici une puce 84 et une antenne 85 qui s'étend entre les portions distantes 69.1 et 69.2 du témoin sonore 68.

Ainsi, en sus de l'émission d'un signal sonore produit par la rupture du marqueur 83 (ici une rupture de l'antenne 85 du marqueur 83) lors du passage du témoin sonore 68 depuis son premier état initial à son deuxième état déformé, une interrogation à l'aide d'un lecteur RFID permet de vérifier rapidement que le tube 91 est correctement raccordé au dispositif de raccordement 100. En effet, si aucune réponse du marqueur 83 n'est reçue par le lecteur RFID, cela signifie que l'antenne 85 est brisée et que le témoin sonore 68 est dans on deuxième état déformé. Cette absence de réponse du marqueur 83 indique que le tube 91 est correctement engagé dans le dispositif de raccordement 100.

Bien entendu, l'invention n'est pas limitée aux modes de réalisations décrits mais englobe toute variante entrant dans le champ de l'invention telle que définie par les revendications.

En particulier,
- bien qu'ici le tronçon de réception soit défini par des douilles reçues dans des chambrages du corps tubulaire du dispositif ainsi que par des chambrages réalisés dans le corps tubulaire du dispositif , l'invention s'applique également à d'autres modes de réalisation du tronçon de réception comme par exemple une unique douille étagée reçue dans un chambrage du corps tubulaire ou bien un ou plusieurs chambrages réalisés dans le corps tubulaire ;
- bien qu'ici le dispositif de raccordement comprenne une rondelle dentée d'accrochage, l'invention s'applique également à d'autres types d'organes d'accrochage comme par exemple une dent unique métallique ou non, des dents de sapin en saillie radiale ;
- bien qu'ici le dispositif de raccordement comprenne un joint d'étanchéité annulaire en élastomère, l'invention s'applique également à d'autres types d'éléments d'étanchéité comme par exemple un joint cylindrique, un ou plusieurs joints annulaire ou non. Le joint est en élastomère synthétique tel qu'un EPDM ou naturel, un élastomère thermoplastique ou similaire ;

- bien qu'ici le dispositif de raccordement comprenne un épaulement annulaire, l'invention s'applique également à d'autres types d'obstacle comme par exemple un épaulement non continu composé de plusieurs portions discrètes, ou un unique épaulement en saillie radiale. L'invention s'applique également à un obstacle qui ne serait pas solidaire du corps tubulaire comme par exemple une bague définissant un obstacle et qui permettrait d'adapter un raccord existant pour qu'il puisse collaborer avec le témoin sonore de l'invention;
- bien qu'ici l'épaulement comprenne une portion dont une face forme un angle de vingt degrés avec la direction d'introduction du tube, l'invention s'applique également à d'autres agencements de l'obstacle comme par exemple un obstacle comprenant une portion formant un angle supérieur ou inférieur à vingt degrés avec la direction d'introduction du tube, ainsi que toute valeur d'angle non nul permettant de faire passer le témoin sonore depuis son premier état initial à son deuxième état déformé ; l'angle est de préférence compris entre vingt et quarante-cinq degrés ;
- bien qu'ici l'épaulement comprenne une portion en saillie radiale, l'invention s'applique également à d'autres agencements de l'épaulement comme un épaulement dépourvu de portion en saillie radiale ;
- bien qu'ici l'obstacle comprenne une rampe sur laquelle le témoin sonore vient se déformer, l'invention s'applique également à d'autres agencements de l'obstacle et du témoin sonore comme par exemple un obstacle dépourvu de rampe et un témoin sonore comprenant une rampe ou tout autre agencement susceptibles de provoquer la déformation du témoin sonore ;-bien qu'ici le dispositif de raccordement comprenne un poussoir de déconnexion dans lequel est monté le témoin sonore, l'invention s'applique également à des dispositifs de raccordement dépourvus de poussoir de déconnexion et dans lesquels le témoin sonore est monté dans le tronçon de réception, celui pouvant être défini par un autre élément que le poussoir de déconnexion ;
- bien qu'ici la circonférence intérieure du témoin sonore comprenne trois rainures de section transversale sensiblement en forme de V, l'invention s'applique également à un nombre différent de rainures comme par exemple une, deux ou plus de trois rainures. L'invention s'applique également à d'autres formes de rainures comme par exemple des rainures de section transversale sensiblement en forme de U, rectangulaire, semi-circulaire ou quelconque ;
- bien qu'ici le témoin sonore soit agencé pour que son deuxième état déformé soit un état instable, l'invention s'applique également à un témoin sonore agencé pour que son deuxième état déformé soit un état stable ;
- bien qu'ici une lame plastique s'étende entre les deux portions distantes du témoin annulaire, l'invention s'applique également à d'autres types d'éléments sécables comme par exemple un élément de forme différente tels qu'un carré, un cylindre ou un solide de section quelconque, ou encore un élément sécable réalisé dans un matériau différent comme par exemple un textile, une fibre minérale ou autre ;
- bien qu'ici la portion localement fragilisée comprenne une portion de section transversale réduite comprenant une zone de recollement, l'invention s'applique également à une zone fragilisée exclusivement constituée de la zone de recollement.

## Revendications

1. Dispositif de raccordement (100) d'un tube (91) comprenant un corps (1) délimitant un canal tubulaire (2) ayant un tronçon de réception (30) d'une portion d'extrémité (90) de tube (91), ledit tronçon de réception (30) définissant une direction d'introduction (Ox) du tube (91) et ayant une ouverture d'entrée (3), ledit tronçon de réception (30) étant pourvu d'un élément d'étanchéité annulaire (45) et d'un organe d'accrochage (40) pour assujettir de manière étanche la portion d'extrémité (90) de tube (91) dans le tronçon de réception (30), le dispositif de raccordement (100) comprenant un témoin sonore annulaire (60, 64, 68, 70) qui est déformable entre un état stable initial et un état déformé, le témoin sonore annulaire (60, 64, 68, 70) étant monté dans le tronçon de réception (30) entre l'ouverture d'entrée (3) et l'élément d'étanchéité annulaire (45) pour être déplacé au-delà de l'élément d'étanchéité annulaire (45) par la portion d'extrémité (90) de tube (91), lors de l'introduction de cette dernière dans le tronçon de réception (30), le témoin sonore annulaire (60, 64, 68, 70) venant alors se déformer, contre un obstacle (37), depuis l'état initial vers l'état déformé en produisant un signal sonore.

2. Dispositif (100) selon la revendication 1, dans lequel l'obstacle (37) est solidaire du corps (1).

3. Dispositif selon l'une quelconque des revendications précédentes, dans lequel l'obstacle (37) comprend une portion (39) formant un angle non nul avec la direction d'introduction (Ox) du tube (91).

4. Dispositif (100) selon l'une quelconque des revendications précédentes, dans lequel l'obstacle (37) comprend une portion (38) en saillie radiale dans le canal (2).

5. Dispositif (100) selon l'une quelconque des revendications précédentes, dans lequel le témoin sonore (70) comprend une face d'appui (75) de l'extrémité (90) du tube (91) et une portion effilée (76) dont la section transversale décroit au fur et à mesure que l'on s'éloigne de la face d'appui (75) selon la direction d'introduction (Ox).

6. Dispositif (100) d'un tube (90) selon l'une quelconque des revendications précédentes, dans lequel le témoin sonore (60, 64, 68, 70) comprend trois sommets (74.1, 74.2, 74.3) en appui sur une paroi du canal tubulaire (2).

7. Dispositif (100) selon l'une quelconque des revendications précédentes, dans lequel le témoin sonore (60, 64, 68, 70) est agencé de manière à retourner élastiquement à son état initial lors du retrait du tube (91) .

8. Dispositif (100) selon l'une quelconque des revendications précédentes, dans lequel le signal sonore est produit par la percussion d'une portion (76) du témoin sonore (70) contre le corps (1).

9. Dispositif (100) selon l'une des revendications 1 à 7, dans lequel le signal sonore est produit par la rupture d'une portion (61, 67, 80) du témoin sonore annulaire (60, 64, 68).

10. Dispositif (100) selon la revendication 9, dans lequel le témoin sonore annulaire (60, 64, 68) comprend une portion (61, 67, 80) localement fragilisée.

11. Dispositif (100) selon la revendication 10, dans lequel la portion (61, 67, 80) localement fragilisée comprend une section transversale (62) réduite par rapport à une section transversale (63) adjacente du témoin sonore annulaire (60, 64).

12. Dispositif (100) selon la revendication 10, dans lequel, le témoin sonore annulaire (70) étant réalisé par injection, la portion localement fragilisée (67) comprend une zone de recollement de la matière injectée opposée à un point d'injection (65).

13. Dispositif (100) selon la revendication 10, dans lequel, la portion (80) localement fragilisée comprend un élément sécable (80) s'étendant entre deux portions distantes (69.1, 69.2) du témoin sonore annulaire (70).

14. Dispositif (100) selon la revendication 13, dans lequel, l'élément sécable (80) comprend un marqueur RFID (83).

## Patentansprüche

1. Verbindungsvorrichtung (100) zum Verbinden eines Rohrs (91), wobei die Verbindungsvorrichtung einen Körper (1) umfasst, der einen rohrförmigen Kanal (2) mit einem Aufnahmeabschnitt (30) zur Aufnahme eines Endabschnitts (90) des Rohrs (91) begrenzt, wobei der Aufnahmeabschnitt (30) eine Einführrichtung (Ox) des Rohrs (91) definiert und eine Eintrittsöffnung (3) hat, wobei der Aufnahmeabschnitt (30) mit einem ringförmigen Dichtungselement (45) und einem Befestigungsorgan (40) versehen ist, um den Endabschnitt (90) des Rohrs (91) in dem Aufnahmeabschnitt (30) auf dichte Weise zu befestigen, wobei die Verbindungsvorrichtung (100) einen ringförmigen akustischen Anzeiger (60, 64, 68, 70) umfasst, der zwischen einem ursprünglichen stabilen Zustand und einem verformten Zustand verformbar ist, wobei der ringförmige akustische Anzeiger (60, 64, 68, 70) in dem Aufnahmeabschnitt (30) zwischen der Eintrittsöffnung (3) und dem ringförmigen Dichtungselement (45) montiert ist, um während des Einführens des Rohrs in den Aufnahmeabschnitt (30) von dem Endabschnitt (90) des Rohrs (91) über das ringförmige Dichtungselement (45) hinaus verschoben zu werden, wobei sich der ringförmige akustische Anzeiger (60, 64, 68, 70) dann an einem Hindernis (37) von seinem ursprünglichen Zustand in seinen verformten Zustand verformt und dabei ein akustisches Signal erzeugt.

2. Vorrichtung (100) nach Anspruch 1, bei der das Hindernis (37) fest mit dem Körper (1) verbunden ist.

3. Vorrichtung nach einem der vorhergehenden Ansprüche, bei der das Hindernis (37) einen Abschnitt (39) umfasst, der einen Winkel von ungleich Null mit der Einführrichtung (Ox) des Rohrs (91) bildet.

4. Vorrichtung (100) nach einem der vorhergehenden Ansprüche, bei der das Hindernis (37) einen radial in den Kanal (2) vorstehenden Abschnitt (38) umfasst.

5. Vorrichtung (100) nach einem der vorhergehenden Ansprüche, bei der der akustische Anzeiger (70) eine Anlagefläche (75) für das Ende (90) des Rohrs (91) und einen sich verjüngenden Abschnitt (76) umfasst, dessen Querschnitt mit Entfernung von der Anlagefläche (75) in Einführrichtung (Ox) abnimmt.

6. Vorrichtung (100) für ein Rohr (90) nach einem der vorhergehenden Ansprüche, bei der der akustische Anzeiger (60, 64, 68, 70) drei Scheitel (74.1, 74.2, 74.3) in Anlage an einer Wand des rohrförmigen Kanals (2) umfasst.

7. Vorrichtung (100) nach einem der vorhergehenden Ansprüche, bei der der akustische Anzeiger (60, 64, 68, 70) derart ausgebildet ist, dass er beim Herausziehen des Rohrs (91) elastisch in seinen ursprünglichen Zustand zurückkehrt.

8. Vorrichtung (100) nach einem der vorhergehenden Ansprüche, bei der das akustische Signal durch das Schlagen eines Abschnitts (76) des akustischen Anzeigers (70) gegen den Körper (1) erzeugt wird.

9. Vorrichtung (100) nach einem der Ansprüche 1 bis 7, bei der das akustische Signal durch das Brechen eines Abschnitts (61, 67, 80) des ringförmigen akustischen Anzeigers (60, 64, 68) erzeugt wird.

10. Vorrichtung (100) nach Anspruch 9, bei der der ringförmige akustische Anzeiger (60, 64, 68) einen lokal geschwächten Abschnitt (61, 67, 80) umfasst.

11. Vorrichtung (100) nach Anspruch 10, bei der der lokal geschwächte Abschnitt (61, 67, 80) einen Querschnitt (62) umfasst, der in Bezug auf einen angrenzenden Querschnitt (63) des ringförmigen akustischen Anzeigers (60, 64) reduziert ist.

12. Vorrichtung (100) nach Anspruch 10, bei der unter Berücksichtigung, dass der ringförmige akustische Anzeiger (70) durch Einspritzen erzeugt wird, der lokal geschwächte Abschnitt (67) eine Zone des erneuten Anhaftens des eingespritzten Materials umfasst, die einem Einspritzpunkt (65) gegenüberliegt.

13. Vorrichtung (100) nach Anspruch 10, bei der der lokal geschwächte Abschnitt (80) ein teilbares Element (80) umfasst, das sich zwischen zwei entfernten Abschnitten (69.1, 69.2) des ringförmigen akustischen Anzeigers (70) erstreckt.

14. Vorrichtung (100) nach Anspruch 13, bei der das teilbare Element (80) einen RFID-Tag (83) umfasst.

## Claims

1. Device (100) for connecting a tube (91), comprising a body (1) delimiting a tubular channel (2) having a section (30) for receiving an end portion (90) of tube (91), said receiving section (30) defining an insertion direction (Ox) of the tube (91) and having an inlet opening (3), said receiving section (30) being provided with an annular sealing element (45) and a fastening member (40) for sealingly securing the end portion (90) of the tube (91) in the receiving section (30), the connecting device (100) comprising an annular sounder (60, 64, 68, 70) which is deformable between an initial stable state and a deformed state, the annular sounder (60, 64, 68, 70) being mounted in the receiving section (30) between the inlet opening (3) and the annular sealing element (45) to be moved beyond the annular sealing element (45) by the end portion (90) of tube (91) during insertion of the latter in the receiving section (30), the annular sounder (60, 64, 68, 70) then deforming against an obstacle (37) from the initial state to the deformed state, producing an audible signal.

2. Device (100) according to claim 1, in which the obstacle (37) is integral with the body (1).

3. Device according to either one of the preceding claims, in which the obstacle (37) comprises a portion (39) forming a non-zero angle with the insertion direction (Ox) of the tube (91).

4. Device (100) according to any one of the preceding claims, in which the obstacle (37) comprises a portion (38) projecting radially into the channel (2).

5. Device (100) according to any one of the preceding claims, in which the sounder (70) comprises a bearing face (75) of the end (90) of the tube (91) and a tapered portion (76) the cross section of which decreases in the direction away from the bearing face (75) in the insertion direction (0x).

6. Device (100) according to any one of the preceding claims of a tube (90), in which the sounder (60, 64, 68, 70) comprises three vertices (74.1, 74.2, 74.3) bearing on a wall of the tubular canal (2).

7. Device (100) according to any one of the preceding claims, in which the sounder (60, 64, 68, 70) is adapted to return elastically to its initial state upon withdrawal of the tube (91).

8. Device (100) according to any one of the preceding claims, in which the sound signal is produced by a portion (76) of the sounder (70) striking the body (1).

9. Device (100) according to any one of claims 1 to 7, wherein the sound signal is produced by the rupture of a portion (61, 67, 80) of the annular sounder (60, 64, 68).

10. Device (100) according to claim 9, in which the annular sounder (60, 64, 68) comprises a locally weakened portion (61, 67, 80).

11. Device (100) according to claim 10, in which the locally weakened portion (61, 67, 80) has a cross section (62) reduced relative to an adjacent cross section (63) of the annular sounder (60, 64).

12. Device (100) according to claim 10, in which, the annular sounder (70) being produced by injection, the locally weakened portion (67) comprises a zone for rebonding the injected material opposite an injection point (65) .

13. Device (100) according to claim 10, in which the locally weakened portion (80) comprises a breakable element (80) extending between two distant portions (69.1, 69.2) of the annular sounder (70).

14. Device (100) according to claim 13, in which the breakable element (80) comprises an RFID tag (83).
